# EUROPÄISCHE PATENTANMELDUNG

(11) **EP 0 560 467 A2**
(43) Veröffentlichungstag der Anmeldung: **15.09.1993**
(21) Anmeldenummer: 93250042.4
(22) Anmeldetag: 04.02.1993
(51) Int. Cl.: G02C 13/00, B24B 9/14, B24B 13/005

(54) **Messtafel mit Zentrier-Adapter in abgestuftem Durchmesser zum Messen von Brillenfassungs-Formscheiben, versehen auf einer zwischen zwei transparenten Kunststofftafeln eingesetzten Messscala**

(30) Priorität: 13.03.1992 DE 9203381 U
(71) Anmelder: Scheibner, Andreas Heinz Christian, D-29643 Neuenkirchen (DE)
(72) Erfinder: Scheibner, Andreas Heinz Christian, D-29643 Neuenkirchen (DE)

(57) **Zusammenfassung**

Die Formscheibenmeßtafel ist in der Augenoptik ein neues Instrument .

Es ist mit vielseitigen und zusätzlichen Meßeigenschaften kombiniert zur exakten Messung von Formscheibensymmetrie, Brillengläsern(3), gefertigter Brillen(4) und Ermittlung optometrischer Gebrauchsdaten im optischen Betrieb im Einsatz. Ein Adapter (1) und die Meßscala ermöglichen die Messung von selbstgefertigten oder Firmenfabrikaten der Brillen-Formscheiben (2), welche bisher oft umständlich und auch an zu Fehlmessungen führende Meßmethodik gebunden gewesen waren.

Vereinfachte,übersichtliche und im besonderen eine genaue Ablesung ist mit diesem Instrument möglich.

## Beschreibung

### Anwendungsgebiet ist die Brillenoptik und im besonderen hier die Augenoptik

Maßgebende Meßtechnik in der Augenoptik richtet sich in der Brillenoptik nach dem neueren hierfür benannten Kastensystem. Und zwar nach der Din Norm: DIN 58 200.

Meßschieber, Meßleisten und Maßstäbe bisheriger Herstellung sind für ein nicht mehr geltendes älteres Meßliniensystem konstruiert.Sie entsprechen im angewandten Meßbereich oft nur unzulänglich den Anforderungen.

Da moderne Brillenglasformen auch extrem asymmetrisch sein können ist mit diesen Meßstäben nicht jede Formscheibe technisch nach dem Kastensytem meßbar.

Die zur Anwendung des Formschliffes eines Brillenglases verwendeten Formscheiben der Brillenfassungen müssen für Ihre Verwendung nach dem Kastenmaß (DIN) vermessen werden. Die Mittenbohrung der Formscheiben zur Adaptierung auf den Maschienendrehpunkt eines Schleifgerätes ist in zwei Durchmessern üblich. In 8mm und 12mm Durchmesser.

Mit einem abgestuften Adapter, mit 8mm und 12mm Durchmesserabstufung, der zentrisch auf einer Platine aus transparentem Kunststoff über einer Meßscala angebracht ist,

ist die Messung von Formscheiben symmetrisch zu allen Seiten ,

des Dreh-Mittelpunktes möglich.

Die auf der Meßscala installierte Meßanordnung ermöglicht ebenfalls das Vermessen der Brillenfassungen und kompletten Brillenkonstruktionen. Aus diesen Fassungen und gefertigten Brillen können die erforderlichen optometrischen Daten abgelesen und in der Praxis einer Brillenoptik im Ladengeschäft und in der Werkstatt kompatibel verwendet werden. Das differenzierte Vermessen von Einzelgläsern in Beziehung auf einzuhaltende Maßgaben ist mit der Vielfalt der Meßanordnung auf der Meßtafel ebenfalls möglich.

### Weiterbildungen der Erfindung

Eine praktische Anwendung wird durch die Designgestaltung eines ergonomisch handlichen aber formstabilen Formates möglich.

Die Formgebung ist hierbei durch die praktische Verwendung in Gewicht und Größe in ästhetischen Dimensionen von ca. 120x70x4 mm zu sehen. Vorteilhafte Ausgestaltung nach Anspruch 2 wäre eine farbig gestaltete mehrfach und vielseitig zu nutzende Scala.

Nach Ausführung 3 könnte die Tafel mit rutschfesten Gummifüßen montiert sein.

Nach 4 könnte ein transparenter Schieberanschlag installiert oder aufzustecken sein.

Nach 5 könnte die Tafel vielseitig von der Vor-und Rückseite zu verwenden sein.

### Darstellung der Erfindung

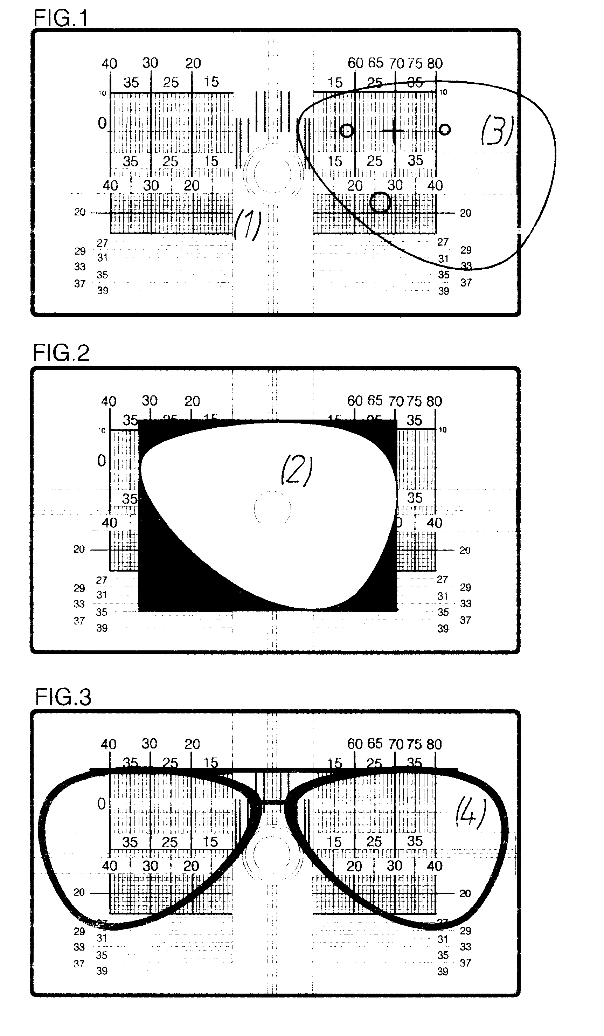

Fig.1) Die Abbildung zeigt in der Fig.1 die Tafel mit dem Adapter und einem Brillenglas, in dem zu vermessenden Stadium der erforderlichen Markierung. Mit dem in der Mitte installierten Adapter.
Fig.2) Die Abbildung zeigt in der Fig.2 die Tafel mit einer installierten zu vermessenden Brillen-Glas-Formscheibe. Umrandet um die Formscheibe dargestellt ist das Meßprinzip des Kastenmeßverfahrens nach Din 58200.
Fig.3) Die Abbildung zeigt in der Fig.2 die Tafel mit einer aufliegenden zu vermessenden fertig montierten Brille.

## Patentansprüche

1. Als Oberbegriff Meßtafel mit Mittenadapter in abgestuftem Durchmesser zum aufstecken von Brillen-Fassungs-Formscheiben. Versehen mit einer zwischen zwei transparenten Kunststofftafeln eingeschobenen Meßscala. Dadurch gekennzeichnet ,daß die Tafel einen Zentrieradapter, in der Durchmesserabstufung von 8mm und 12mm aufweist, der über einer Meßscala justiert ist.

2. Meßtafel nach Anspruch 1. dadurch gekennzeichnet ,daß die Skala austauschbar ist.

3. Meßtafel nach Anspruch 1 und 2 dadurch gekennzeichnet daß unter der Meßtafel Sockelfüße zur rutschfesten Handhabung montiert sind.

4. Meßtafel nach Anspruch 1 bis 3 dadurch gekennzeichnet, daß an der Tafel eine Anschlagleiste verschiebbar aufgesteckt werden kann.

5. Meßtafel nach Anspruch 1 bis 4 dadurch gekennzeichnet ,daß mit der Vor-und Rückseite die Tafel wendbar zu verwenden ist.
